# EUROPEAN PATENT SPECIFICATION

(11) **EP 4 489 988 B1**
(45) Date of publication and mention of the grant of the patent: **08.07.2026**
(21) Application number: 23711813.8
(22) Date of filing: 09.03.2023
(51) Int. Cl.: B60L 13/03, B60L 13/04, B60L 13/06, B60L 13/10, B61B 13/08, B61B 13/10

(54) **CONTROL MODULE FOR LINEAR RELUCTANCE MOTOR**
STEUERUNGSMODUL FÜR LINEARER RELUKTANZMOTOR
MODULE DE CONTRÔLE DE MOTEUR LINÉAIRE À RÉLUCTANCE

(30) Priority: 09.03.2022 NL 2031207
(43) Date of publication of application: 15.01.2025
(73) Proprietor: Hardt IP B.V., 3029 AK Rotterdam (NL)
(72) Inventor: ABOU HARFOUCH, Youssef, 3029 AK Rotterdam (NL); SPEK, Gert, 3029 AK Rotterdam (NL); OUWEHAND, Paul Jacob Pieter, 3029 AK Rotterdam (NL)
(74) Representative: V.O.
(86) International application number: PCT/NL2023/050114
(87) International publication number: WO 2023/172137

(56) References cited:
- US-A- 4 979 445
- US-A- 5 628 252
- US-A- 5 904 101
- US-A1- 2020 164 750
- NOLAND JONAS KRISTIANSEN: "Prospects and Challenges of the Hyperloop Transportation System: A Systematic Technology Review", IEEE ACCESS, IEEE, USA, vol. 9, 8 February 2021 (2021-02-08), pages 28439 - 28458, XP011839140, DOI: 10.1109/ACCESS.2021.3057788

## Description

### TECHNICAL FIELD

The various aspects and implementations thereof relate to a linear reluctance motor in a hyperloop system and control thereof.

### BACKGROUND

Various propulsion systems have been proposed for hyperloop transport systems, for example in NL2019259. Such systems generally require large currents transported over large distances. As dissipated power is proportional to the square of the current and proportional to the resistance, hence the length of such line, such option is not always very efficient.

US 5,904,101 discloses A transportation system for levitated propulsion of a vehicle relative to a guideway having first sections for linear vehicle travel and second sections for turning movements of the vehicle. The system includes AC-excited magnets for low-speed levitated travel in pivot turns, guideway switching areas, and curving sections of guideway including superelevated structure. The system includes guideway mounted primary electrical members in pivot turns and guideway switching areas. In switching areas vehicle steering is provided by null flux loops located on the guideway structure. In the curving sections of guideway, there is a dovetail trough containing secondary electrical members that interact with deployable primary electrical members on the vehicle which are independently positioned and powered for propelling the vehicle along the curving sections.

US 5,628,252 discloses An apparatus for guiding and levitating a vehicle. The apparatus comprises a guideway mechanism upon which the vehicle travels. The apparatus is also comprised of a mechanism for actively controlling differential and lateral guidance or differential and vertical levitation strength of the vehicle with respect to the guideway mechanism. The controlling mechanism is electrodynamically reactive with the guideway mechanism. A method for guiding and levitating a vehicle. The method comprises the steps of guiding a vehicle along the guideway with electrodynamic guidance coils. Then, there is the step of actively controlling alternating current through the guidance coils to correspond with guideway curvature so the vehicle is maintained in a stable position relative to the guideway as it moves around a curve in the guideway and experiences roll compensation.

### SUMMARY

It is preferred to provide an improved system for propulsion of a pod as a vehicle in a hyperloop as a transportation system.

This system provides control of a linear reluctance motor such that the linear reluctance motor may be used for a hyperloop transportation system. Based on data received from sensor, with respect to relative distance between primary and secondary, and distance between the primary and the secondary, both primaries may be controlled and in particular the current through the primaries may be controlled such that the vehicle is propelled linearly along the track, for example in a tube, and distance between primary and secondary is safely controlled, as further defined by the independent claims.

In one implementation, the control module is further arranged to, if the received data indicates that the first distance is larger than the second distance by more than a first distance threshold, perform at least one of increase a first amplitude of the first current; and decrease a second amplitude of the second current. Current through windings of the primary control speed, as a function of a current level, the frequency of the current as well phase in relation to spatial phase of poles of the primary relative to the poles of the secondary. But the current level also influences an attraction force between the primaries and the secondaries. This parameter requires control to ensure reliable transportation.

In another implementation, the control module is further arranged to, if the received data indicates that the first distance is smaller than the second distance by more than a second distance threshold, perform at least one of increase a first amplitude of the second current; and decrease a second amplitude of the first current. This works for an alternating current.

In a further implementation, the first current signal and the second current signal are alternating current signals; and the control module is further arranged to execute at least one of if the first amplitude is increased, change the first current signal such that a first flux provided by the first electromagnetic actuator module increases at a position further upstream compared to prior to the change of the first phase, if the first amplitude is decreased, change the first current signal such that a first flux provided by the first electromagnetic actuator module increases at a position less upstream compared to prior to the change of the first phase, if the second amplitude is increased, change the second current signal such that a second flux provided by the second electromagnetic actuator module increases at a position further upstream compared to prior to the change of the second phase; and if the second amplitude is decreased, change the second current signal such that a second flux provided by the second electromagnetic actuator module increases at a position less upstream compared to prior to the change of the second phase. This implementation provides balanced control of propulsion speed as well as lateral distance between primary and secondary - and tube wall and vehicle.

In yet another implementation, the first current signal has a first frequency and a first phase and, if the first current signal is changed, the frequency is kept substantially constant and the phase is changed and the second current signal has a second frequency and a second phase and, if the second current signal is changed, the frequency is kept substantially constant and the phase is changed. By controlling phase, in association with determined spatial phase between poles of the primary and poles of the secondary, improved control is provided balancing propulsion speed requirements to lateral distance control between vehicle and tube wall - and between primary and secondary.

In again another implementation, the control module is further arranged to receive data on at least one of a first current through and a first voltage over at least part of the first electromagnetic actuator module over time and determine the first distance based on the first current and the first voltage over time; and receive data on at least one of a second current through and a second voltage over at least part of the second electromagnetic actuator module over time and determine the second distance based on the second current and the second voltage over time. This implementation requires current and voltage sensors, which are generally available anyway and does not need dedicated sensors for measuring at least one of spatial phase, speed and distance of primary relative to secondary or other elements being mechanically part of the same system.

In yet another implementation, the control module is further arranged to receive data on at least one of a first current through and a first voltage over at least part of the first electromagnetic actuator module over time and determine the first relative position based on the first current and the first voltage over time and receive data on at least one of a second current through and a second voltage over at least part of the second electromagnetic actuator module over time and determine the second relative position based on the second current and the second voltage over time. This implementation requires current and voltage sensors, which are generally available anyway and does not need dedicated sensors for measuring at least one of spatial phase, speed and distance of primary relative to secondary or other elements being mechanically part of the same system.

In again a further implementation, the control module is further arranged to determine at least one of an amplitude, a frequency and a phase of at least one of the first current, the first voltage, the second current and the second voltage. Such parameters provide more detailed input for more convenient or more efficient control.

In yet another implementation, the control module is further arranged to determine the first relative position based on a phase of at least one of the first current and the first voltage; and determine the second relative position based on a phase of at least one of the second current and the second voltage. This implementation allows for more efficient control, with available data.

In again another implementation, the control module is arranged to receive data on the first distance from a first distance sensor; and the control module is arranged to receive data on the second distance from a second distance sensor. Deriving position parameters from current and voltage sensors may require dedicated and extensive processing. This implementation uses dedicated sensor, which makes data processing simpler. Furthermore, in certain scenarios, use of dedicated distance sensors may be more reliable.

In yet a further implementation, the first variation of the first reluctance is a change from a first reluctance value to a second reluctance value, wherein the first reluctance value is higher or lower than the second reluctance value and the second variation of the first reluctance is a change from a third reluctance value to a fourth reluctance value, wherein the third reluctance value is higher or lower than the fourth reluctance value. This implementation provides improved control of the linear reluctance motor.

In another implementation, the current signal comprises three alternating currents having a phase difference of 120° relative to one another. This provides support for use of multiple phases, allowing smoother movement.

A second aspect provides a vehicle arranged to be propelled in a tubular system along a propulsion track. The propulsion track comprises a first rail having a first reluctance periodically varying over the length of the propulsion track and a second rail having a second reluctance periodically varying over the length of the propulsion track. The vehicle comprises a first electromagnetic actuator module arranged to interact with the first rail; and a second electromagnetic actuator module arranged to interact with the second rail. The vehicle further comprises the control module according to the first aspect.

In an example, the first electromagnetic actuator module is rigidly connected to the second electromagnetic actuator module. This allows for more stable propulsion and more stable control, which may provide more safety.

In a further example, the first electromagnetic actuator module is provided at a first lateral side of the vehicle and the second electromagnetic actuator module is provided at a second lateral side of the vehicle, the first lateral side being substantially opposite to the second lateral side. This provides stable control and propulsion.

A third aspect provides a transport system comprising a tubular transport environment comprising a propulsion track comprising a first rail having a first reluctance periodically varying over the length of the propulsion track and a second rail having a second reluctance periodically varying over the length of the propulsion track. The system further comprises the vehicle according to the second aspect. The invention is defined in the appended claims.

### BRIEF DESCRIPTION OF THE DRAWINGS

The various aspects and variations thereof will now be discussed in further detail in conjunction with drawings. In the drawings:
Figure 1 A: shows a hyperloop transport system;
Figure 1 B: shows a cross-section of a hyperloop transport system;
Figure 2 A: an example of a linear reluctance motor;
Figure 2 B: another example of a linear reluctance motor;
Figure 2 C: a further example of a linear reluctance motor;
Figure 2 D: a next example of a linear reluctance motor;
Figure 3 A: a first view of a linear reluctance motor with a cooling module;
Figure 3 B: a second view of a linear reluctance motor with a cooling module;
Figure 4: a control system for two linear reluctance motors for a hyperloop system; and
Figure 5: a graph illustrating relations between propulsion force and lift force.

### DETAILED DESCRIPTION

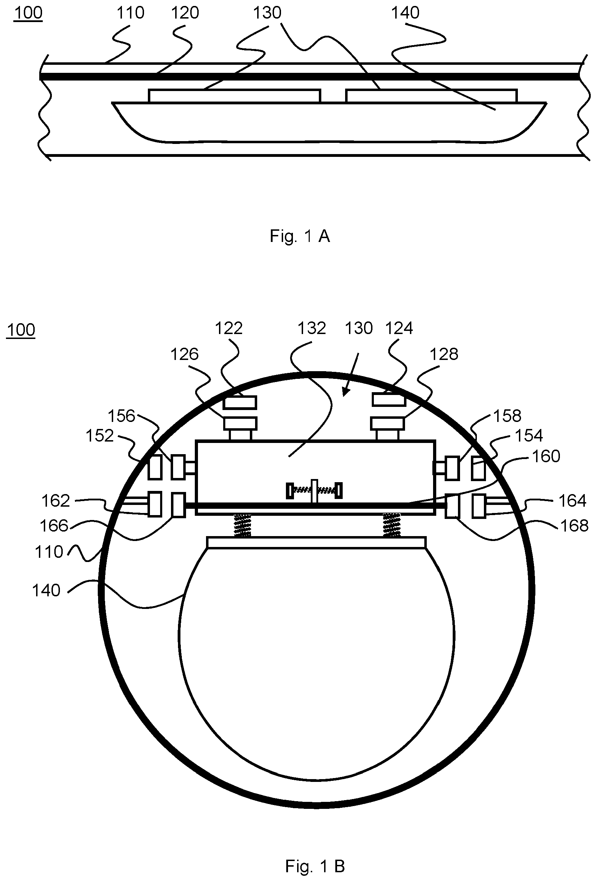

Figure 1 A shows a hyperloop transport system 100 comprising a tube 110 in which a pod 140 is arranged to travel. Within the tube 110, a low-pressure environment is created to reduce air resistance of the pod 140 to allow the pod 140 to travel at high speeds efficiently. The pod 140 is magnetically suspended on a suspension track 120 by means of bogies 130.

Figure 1 B shows a cross-section of the hyperloop transport system 100. In particular, Figure 1 B shows the suspension system of the pod 140 in further detail, the suspension system comprising the bogie 130 and the suspension track 120. The suspension track 120 comprises a first suspension rail 122 and a second suspension rail 124. On the bogie 130, a first suspension magnet 126 is provided, which first suspension magnet 126 is arranged to engage with the first suspension rail 122. Furthermore, on the bogie 130, a second suspension magnet 128 is provided, which second suspension magnet 128 is arranged to engage with the second suspension rail 124.

The first suspension magnet 126 and the second suspension magnet 128 may be implemented as electromagnets or a combination permanent magnets and electromagnets. With electromagnets, the core may be provided comprising ferromagnetic material, magnetic material, other, or a combination thereof. By adjusting a current through coils comprised by the electromagnets, an amount of attraction between the suspension magnets and the suspension rail may be adjusted, thus adjusting lift of the pod 140 relative to the suspension track 120. The suspension magnets are connected to a central bogie body 132 by means of springs, which may be helical springs, air springs, other, or a combination thereof.

The bogie 130 is further provided with a first guiding magnet 156 and a second guiding magnet 158. The first guiding magnet 156 and the second guiding magnet 158 may be implemented as electromagnets or a combination of permanent magnet and electromagnets. With electromagnets, the core may be provided comprising ferromagnetic material, magnetic material, other, or a combination thereof. The first guiding magnet 156 is arranged to engage with a first guiding rail 152 and the second guiding magnet 158 is arranged to engage with a second guiding rail 154, which first guiding rail 152 and second guiding rail 154 are part of a guiding track. Currents through electromagnets comprised by the first guiding magnet 156 and the second guiding magnet 158 may be controlled to ensure a position of the pod 140 within the tube 110 is substantially centred, within boundaries. An example thereof is provided in publication WO 2019/164395.

The first guiding magnet 156 and the second guiding magnet 158 may be connected to the central bogie body 132 by means of springs, which may be helical springs, air springs, other, or a combination thereof. The bogie 130 is in this example provided with a first propulsion magnet 166 and a second propulsion magnet 168. The first propulsion magnet 166 and the second propulsion magnet 168 may be implemented as electromagnets or a combination of permanent magnets and electromagnets. With electromagnets, the core may be provided comprising ferromagnetic material, magnetic material, other, or a combination thereof.

The first propulsion magnet 166 is arranged to engage with a first propulsion rail 162 and the second propulsion magnet 168 is arranged to engage with a second propulsion rail 164, which first propulsion rail 162 and second propulsion rail 164 are part of a propulsion track. Currents through electromagnets comprised by the first propulsion magnet 166 and the second propulsion magnet 168 may be controlled to propel the pod 130 through the tube 110. The first propulsion magnet 166 and the second propulsion magnet 168 may also be used for control purposes, for example to control the distance to the propulsion rail.

The first propulsion magnet 166 and the second propulsion magnet 168 are in this implementation, as an option, connected by means of a substantially rigid propulsion body 160. The first propulsion magnet 166 and the second propulsion magnet 168 are connected to the central bogie body 132 by means of springs, which may be helical springs, air springs, other, or a combination thereof. The substantially rigid propulsion body 160 is arranged to move substantially freely over one, two, three or more axes relative to the central bogie body 132. Also the substantially rigid propulsion body 160 may be connected to the central bogie body 132 by means of springs, which may be helical springs, air springs, other, or a combination thereof.

The central bogie body 132 may be connected to the pod 140 by means of springs, which may be helical springs, air springs, other, or a combination thereof..

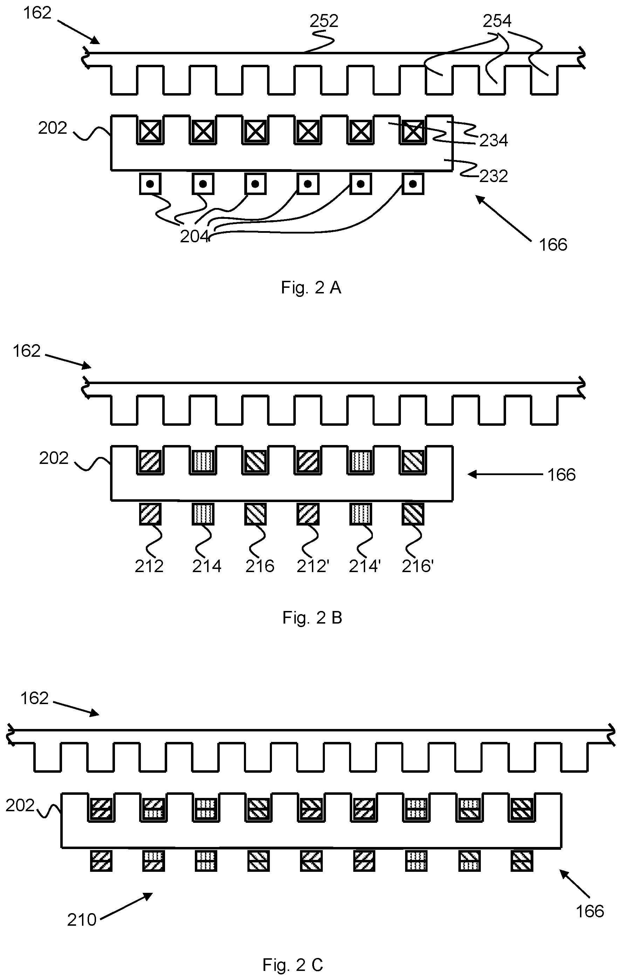

Figure 2 A shows a detail of the first propulsion rail 162 and the first propulsion magnet 166. The first propulsion rail 162 and the first propulsion magnet 166 constitute a linear reluctance motor. The first propulsion 162 rail comprises a rail body 252 and rail protrusions 254. As a result of the periodically provided rail protrusions 254, the reluctance of the first propulsion rail 162 varies periodically. The rate of change of reluctance over time or unit of distance is proportional to the propulsion force provided. The first propulsion magnet 166 comprises a magnet core 202, the magnet core 202 comprising a core body 232 and a multitude of pole protrusions 234 protruding from the core body 232.

The magnet core 202 is in this implementation one body, comprising substantially one material. The magnet core 202 may be laminated to reduce Eddy current loss, the layers are preferably stacked in a direction perpendicular to the view in Figure 2 A. In this way, material properties like magnetic permeability have no step function over the lengths of the magnet core 202 and along the axis of the core body 232 in particular. Furthermore, the permeability is substantially continuous from the core body 232 towards the pole protrusions 234. The core body 232 may have a rectangular and in particular a square cross-section, a circular cross-section, or another shape. The pole protrusions may have a rectangular and in particular a square cross-section, a circular cross-section, or another shape.

The core body 232 has in this embodiment an elongate shape and the pole protrusions 234 are substantially equidistantly distributed over the length of the core body 232. In this implementation, the pole protrusions 234 protrude from one side of the core body 232; in other implementations, pole protrusions may additionally or alternatively protrude from other sides or more sides of the core body 232. In this implementation, the gaps between the pole protrusions 234 is substantially equal to the width of the pole protrusions 234, in other implementations, the gaps may be wider or narrower than the width of the pole protrusions 234. The pitch - or periodicity - of the pole protrusions 234 is in this implementation substantially the same as the pitch of the rail protrusions 254. In other implementations, the pitch of the pole protrusions 234 is larger or smaller than the pitch of the rail protrusions 254 by an integer multiple, i.e. two, three, four, five or more times smaller or larger. In again another implementation, the pitch of the pole protrusions 234 is larger or smaller than the pitch of the rail protrusions 254 by a multitude other than an integer to prevent a deadlock position in which the pole protrusions 234 are aligned to the rail protrusions 254 and the pod 140 is not moving relative to the track 120. In such implementation, the multitude may be an integer value plus a half - i.e., one divided by two.

Between the pole protrusions 234, windings 204 are provided around the core body 232. As such, the axes of the windings 204 are substantially parallel to the axis of the core body 232. The windings 204 may be connected in parallel, in series or may be separately controllable and separately connectable to independent electrical power supplies. The windings 204 may be provided by means of wires provided around the core body 232. Alternatively or additionally, the windings 204 are provided as tape-shaped conductors, wherein the width of the tape may have substantially the same width as the gaps between the pole protrusions 234. In another implementation, the axes of the windings 204 may be provided under an angle relative to the axis of the core body 232, yet such that a plane in which the axes of the windings 204 are provided has a normal that is perpendicular to the axis of the core body 232. With the windings 204 provided between the pole protrusions 234, each winding is arranged to provide, upon excitation by receiving a current, arranged to generate a magnetic flux debouching from the pole protrusions 234. As such, each pole protrusions 234 may be characterised as an implementation of an electromagnetic actuator module. Additionally or alternatively, also the whole first propulsion magnet may be considered as an implementation of an electromagnetic actuator module.

Figure 2 B shows the windings 204 connected to a three-phase power supply; a first winding 212 and a fourth winding 212' are connected to a first phase, a second winding 214 and a fifth winding 214' are connected to a second phase and a third winding 216 and a sixth winding 216' are connected to a third phase. In one implementation, the three phases are provided with a sine wave current and the phases are 120° or 2/3π rad apart. The three groups of windings, one for each phase, are electrically insulated from one another.

Figure 2 C shows a more complex three-phase linear reluctance motor, having the three phases distributed over nine groups of combined windings per gap between the pole protrusions 234. In this implementation, the phases are distributed as follows:
Winding 1: phase 1 and phase 1
Winding 2: phase 1 and phase 2
Winding 3: phase 2 and phase 2
Winding 4: phase 3 and phase 3
Winding 5: phase 1 and phase 3
Winding 6: phase 1 and phase 1
Winding 7: phase 2 and phase 2
Winding 8: phase 2 and phase 3
Winding 9: phase 3 and phase 3

This distribution of phases may be repeated in other implementations by providing any multitude of the nine groups of windings. Per gap between the pole protrusions, the windings of the separate phases may be provided in any way, grouped per phase, in any order or interleaved.

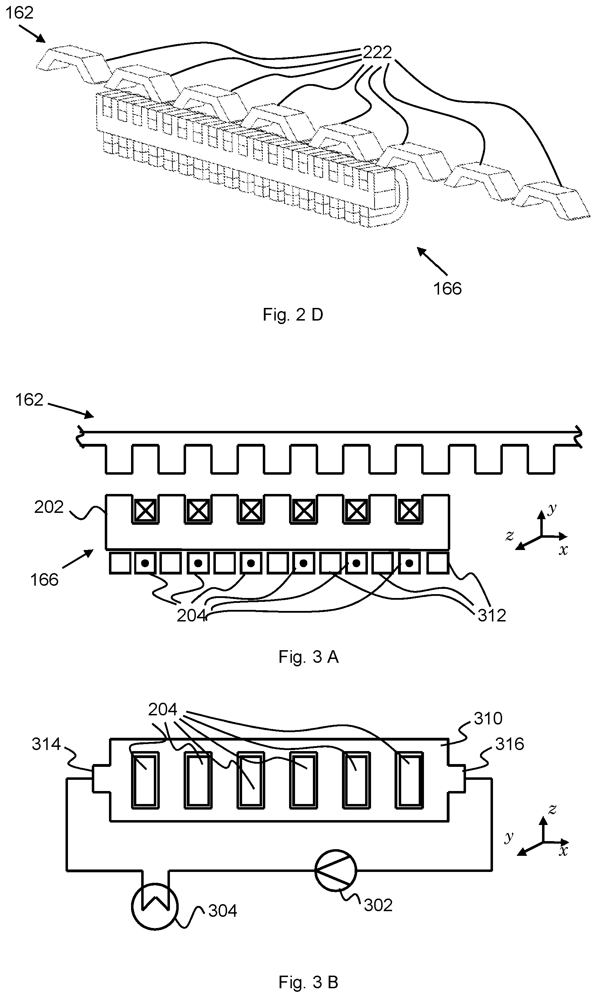

Figure 2 D shows another implementation of a linear reluctance motor. The first propulsion magnet 166, the mover, is substantially the same as shown in Figure 2 C. The first propulsion rail 162, the secondary passive part, has a different configuration. In the configuration depicted by Figure 2 D, the first propulsion rail 162 comprises V-shaped ferromagnetic elements 222. The V-shaped elements 222 have legs directed towards the first electromagnet. The poles of each V-shaped elements 222 are in this implementation spaced apart approximately five times - between four and five times - the distance between the pole protrusions 234 of the first propulsion magnet 166. The V-shaped elements 222 may be embedded in another material or, alternatively or additionally, be connected to the inside of the tube 110, thus constituting the first propulsion rail 162 not as a continuous rail, but as a rail constituted by discrete elements.

Figure 3 A shows the first propulsion magnet 166 with cooling ducts 312 provided between the windings 204. Through the cooling ducts, a coolant fluid may be provided that absorbs thermal energy dissipated by the windings 204. The cooling ducts 312 may be connected in parallel or in series, or a combination thereof. In another implementation, each of the cooling ducts 312 may be provided separately and independently with the coolant fluid. In this implementation, the cooling ducts 312 are provided on a side of the magnet core 202 opposite to a side where the pole protrusions 234 protrude from the magnet core 202. Additionally or alternatively, the cooling ducts 312 may be provided at one or more sides of magnet core adjacent to a side or a face of the magnet core from which the pole protrusions protrude.

Figure 3 B shows a bottom view of the first propulsion magnet 166 with the cooling ducts 312 all connected in parallel, as part of a cooling reservoir 310. The cooling reservoir 310 comprises a coolant fluid inlet 314 and a coolant fluid outlet 316. The coolant fluid outlet 316 and the coolant fluid inlet 314 are in this implementation provided at the smaller opposite sides of the cooling reservoir 310. In other implementations, they may be provided at the longer opposite sides or at the same side of the cooling reservoir 310.

The coolant fluid outlet 316 is connected to the coolant fluid inlet 314 by means of a coolant pump 302 and a heat exchanger 304. The heat exchanger 304 is arranged to transfer thermal energy from the coolant fluid to another medium. The order of the coolant pump 302 and the heat exchanger 304 may be different in another implementation. In another implementation, the cooling ducts 312 are connected by extending the ducts 312 and the rest of the cooling reservoir 310 below the windings 204, at a side of the cooling reservoir 310 opposite to where the magnet core 202 is provided. In again another implementation, the cooling ducts 312 are connected in series, forming one cooling duct that follows a meandering path between the windings 204. In another implementation, parallel and series configurations may be combined.

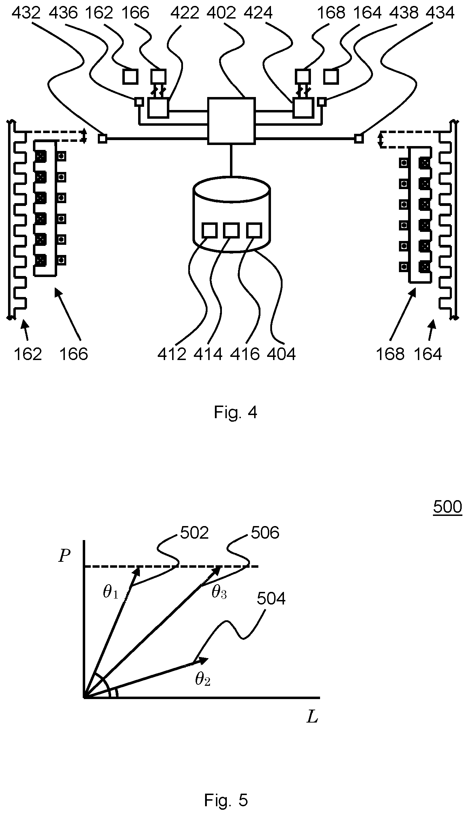

Figure 4 shows a control system for providing controlled power to a linear reluctance motor comprising the propulsion rails and the propulsion magnets. The first propulsion rail 162, the second propulsion rail 164, the first propulsion magnet 166 and the second propulsion magnet 168 are depicted twice for clarity. The control system comprises a central control unit 402.

The central control unit 402 is connected to a first gap sensor 436 and a second gap sensor 438. The first gap sensor 436 is arranged to detect a gap between the first propulsion magnet 166 and the first propulsion rail 162 and to generate a first gap signal from which a size of the gap may be determined. The second gap sensor 438 is arranged to detect a gap between the second propulsion magnet 168 and the second propulsion rail 164 and to generate a second gap signal from which a size of the gap may be determined.

The central control unit 402 is also connected to a first relative position sensor 432 and a second relative position sensor 434. The first relative position sensor 432 is arranged to determine a distance between a pole protrusion 234 of the first propulsion magnet 166 and a rail protrusion 254. As both the pole protrusions 234 and the rail protrusions 254 are provided at fixed intervals and as the fixed intervals are the same or one fixed interval is a multitude of the other fixed interval, the value of the distance has a maximum. The maximum value is equal to or the same as a first maximum distance between adjacent pole protrusions 234 or a second maximum distance between rail protrusions 254. As such, the relative position sensors may also be considered as phase sensors, arranged to determine a phase distance, a phase position or a phase difference between the pole protrusions 234 on one hand and the rail protrusions 254 on the other hand.

The second relative position sensor 434 is arranged to determine a distance between a pole protrusion of the second propulsion magnet 168 and a rail protrusion 254 of the second propulsion rail 164. The first relative position sensor 432 is arranged to provide a signal from which the aforementioned relative position or phase difference between the first propulsion magnet 166 and the first propulsion rail 162 may be determined. The second relative position sensor 434 is arranged to provide a signal from which the aforementioned relative position or phase difference between the second propulsion magnet 168 and the second propulsion rail 164 may be determined.

The gaps between the propulsion magnets and the phase differences may be determined using separate dedicated physical sensors. Alternatively or additionally, one or more of these entities may be determined based on waveforms of currents and voltages over the propulsion magnets. As such, one or more of the gaps between the propulsion magnets and the phase differences may be determined based on a determined back electromagnetic force experience by the propulsion magnets while moving along the propulsion rails based on, among others, sensed voltages over the windings, sensed currents through the windings and resistances of the windings.

The central control unit 402 is connected to a control memory 404. The control memory 404 is arranged to have control program data 412 stored therein to program the central control unit 402 to operate as discussed below. Furthermore, the control memory 404 is arranged to have stored thereon reference data 414 comprises reference values for the phase difference as discussed above and the gap size as discussed above.

The control memory 404 is also arranged to store control effect relational data 416, which control effect relational data 416 describes relations between supply power provided to the first propulsion magnet 166 and the second propulsion magnet 168 with respect to power or current, phase, frequency and other characteristics of the supply power on one hand and gap sizes, phase differences, propulsion speed of the pod 140 on the other hand. Additionally or alternatively, the control effect relational data 416 may comprise data on propulsion forces and attraction forces and the relation thereof to currents and waveforms of currents provided to the windings of the propulsion magnets.

Based on the reference data 414 and the control effect relational data 416, the central control unit 402 controls a first power supply 422 and a second power supply 424. For safety and security purposes, the central control unit 402 may be provided in two parts; a first control circuit for controlling the first power supply 422 and a second control circuit for controlling the second power supply 424.

Providing control electronics in two parts, one for each side, may be required or at least preferred to provide a degree of isolation between electrical and electronic elements on a left side of the pod 140 and electrical and electronic elements on a right side of the pod 140. In such implementation, also the control memory 404 may be implemented in two parts, with one memory circuit per control circuit. Furthermore, in such implementation, there would be communication channels between the first control circuit and the second control circuit to ensure symmetrical control at both sides of the pod 140.

The first power supply 422 is arranged to provide one current and preferably three currents to the first propulsion magnet 166. The total first current, in one or three phases, is preferably based on a first current signal provided by the central control unit 402 to the first power supply 422. The currents provided are alternating currents. The three currents are provided to three groups of windings, which windings may be arranged as discussed above.

Likewise, the second power supply 424 is arranged to provide one current and preferably three currents to the second propulsion magnet 168. The total second current, in one or three phases, is preferably based on a second current signal provided by the central control unit 402 to the second power supply 424.

The power supplies may also be arranged to sense currents provided to the propulsion magnets. The sensed current may be used for control of current provided, which allows closed loop feedback control of the provided currents. Additionally or alternatively, the current sensor signals are provided to the central control unit 402 and the feedback control is managed by the central control unit 402.

While the windings of the propulsion magnets are provided with electrical power and electrical currents in particular, the pod 140 propelled along the propulsion rails. And another effect of the provided currents is a force resulting in attraction of the propulsion magnets and the propulsion rails. The balance between the attraction force, which may also be characterised as a lifting force, and the propulsion force is, among others, determined by the phase difference or relative distance between the pole protrusions 234 of the propulsion magnets and the rail protrusions 254 as described above on one hand and a moment at which a particular winding 204 is powered, which particular winding 204 is provided adjacent to the applicable pole protrusion or the applicable pole protrusions. The larger the relative distance at the moment the particular winding 204 is powered, the higher the propulsion force will be and the lower the attraction force or lift force will be.

With this effect, the propulsion magnets may also be employed as guiding magnets, in addition to or instead of the first guiding magnet 156 and the second guiding magnet 158. In one implementation, the first guiding magnet 156 and the second guiding magnet 158 may be omitted. In another implementation, both the guiding magnets and the propulsion magnets are present. In one implementation, both the guiding magnets and the propulsion magnets are employed to centre the pod 140 in the tube 110. In another implementation, the guiding magnets are employed to centre the pod 140 in the tube 110 and the propulsion magnets are employed to centre the propulsion body 160 within the tube 110. It is noted that the propulsion body 160 suspended within the central bogie body 132 in a translating manner, such that it may translate horizontally, substantially perpendicular to the direction of movement of the pod 140. This applied to the guiding body 150 as well.

Figure 5 shows a graph depicting the relation between the propulsion force - vertical axis - and the attraction force or lift force - horizontal axis. A first vector 502 indicates a first relation between the lift force and the propulsion force, at a first current amplitude and a first relative distance θ₁. A second vector indicates a second relation between the lift force and the propulsion force, at the first current amplitude and a second relative distance θ₂. For the second vector, the second relative distance is smaller than the first relative distance. This results in a higher lift force and a lower propulsion force.

If a higher lift force is required at the same propulsion force, the current is increased and another relative distance is selected. This is visualised with a third vector, indicating a third relation between the lift force and the propulsion force at a second current amplitude and a third relative distance θ₃. The second current amplitude is higher than the first current amplitude.

A higher lift force may be required if an applicable gap between the applicable propulsion rail and applicable propulsion magnet is more than a given tolerance distance or threshold distance. This applies to both side of the vehicle. In such case, an applicable amplitude of a current for the applicable propulsion magnet is increased. Alternatively or additionally, another current of another propulsion magnet opposite to the applicable propulsion magnet is decreased.

As long as there is a propulsion force, the lift force cannot be zero. This means that if the propulsion magnets are used for lateral distance control - for guiding control -, the guiding forces are to be controlled as a difference between a first lift force controlled by means of the first propulsion magnet 166 and a second lift force controlled by means of the second propulsion magnet 168. This means that first waveforms of first currents provided to the first propulsion magnet 166 may be different from second waveforms of second currents provided to the second propulsion magnet 168. It is noted that the propulsion speed of the pod 140 may, in addition to the relative distance, also be controlled by controlling frequency of current signals provided to windings of the propulsion magnets.

## Claims

1. A control module for driving a vehicle (140) relative to a track,
the track comprising:
a first rail (162, 164) having a first reluctance periodically varying over the length of the track;
a second rail (162, 164) having a second reluctance periodically varying over the length of the track;
the vehicle comprising:
a first electromagnetic actuator module (166, 168) arranged to interact with the first rail for propelling the vehicle relative to the track; and
a second electromagnetic actuator module (166, 168) arranged to interact with the second rail for propelling the vehicle relative to the track;
the control module **characterized in** being arranged to receive data indicating at least one of:
a first distance between the first electromagnetic actuator module and the first rail;
a second distance between the second electromagnetic actuator module and the second rail;
a first relative position of a first variation of the first reluctance relative to the first electromagnetic actuator module; and
a second relative position of a second variation of the second reluctance relative to the second electromagnetic actuator module;
the control module being further arranged to:
based on the received data, generate a first current signal having a first waveform and provide the generated first current signal to the first electromagnetic actuator module;
based on the received data, generate a second current signal having a second waveform and provide the generated second current signal to the second electromagnetic actuator module.

2. The control module of claim 1, wherein the control module is further arranged to, if the received data indicate that the first distance is larger than the second distance by more than a first distance threshold, perform at least one of:
increase a first amplitude of the first current; and
decrease a second amplitude of the second current.

3. The control module of claim 1, wherein the control module is further arranged to, if the received data indicate that the first distance is smaller than the second distance by more than a second distance threshold, perform at least one of:
increase a second amplitude of the second current; and
decrease a first amplitude of the first current.

4. The control module according to any one of claim 2 and claim 3, wherein the first current signal and the second current signal are alternating current signals; and the control module is further arranged to execute at least one of:
if the first amplitude is increased, change the first current signal such that a first flux provided by the first electromagnetic actuator module (166, 168) increases at a position further upstream compared to prior to the change of the first current signal;
if the first amplitude is decreased, change the first current signal such that a first flux provided by the first electromagnetic actuator module (166, 168) increases at a position less upstream compared to prior to the change of the first current signal;
if the second amplitude is increased, change the second current signal such that a second flux provided by the second electromagnetic actuator module (166, 168) increases at a position further upstream compared to prior to the change of the second current signal; and
if the second amplitude is decreased, change the second current signal such that a second flux provided by the second electromagnetic actuator module (166, 168) increases at a position less upstream compared to prior to the change of the second current signal.

5. The control module of claim 4, wherein:
the first current signal has a first frequency and a first phase and, if the first current signal is changed, the frequency is kept substantially constant and the first phase is changed; and
the second current signal has a second frequency and a second phase and, if the second current signal is changed, the frequency is kept substantially constant and the second phase is changed.

6. The control module of any one of the preceding claims, wherein the control module is further arranged to
receive data on at least one of a first current through and a first voltage over at least part of the first electromagnetic actuator module (166, 168) over time and determine the first distance based on the first current and the first voltage over time; and
receive data on at least one of a second current through and a second voltage over at least part of the second electromagnetic actuator module (166, 168) over time and determine the second distance based on the second current and the second voltage over time.

7. The control module of any one of the preceding claims, wherein
the control module is further arranged to:
receive data on at least one of a first current through and a first voltage over at least part of the first electromagnetic actuator module (166, 168) over time and determine the first relative position based on the first current and the first voltage over time; and
receive data on at least one of a second current through and a second voltage over at least part of the second electromagnetic actuator module (166, 168) over time and determine the second relative position based on the second current and the second voltage over time.

8. The control module of claim 7, wherein the control module is further arranged to determine at least one of an amplitude, a frequency and a phase of at least one of the first current, the first voltage, the second current and the second voltage.

9. The control module of claim 8, wherein the control module is further arranged to
determine the first relative position based on a phase of at least one of the first current and the first voltage; and
determine the second relative position based on a phase of at least one of the second current and the second voltage.

10. The control module of any one of the claims 1 to 5, wherein:
the control module is arranged to receive data on the first distance from a first distance sensor (436, 438); and
the control module is arranged to receive data on the second distance from a second distance sensor (436, 438).

11. The control module of any one of the preceding claims, wherein
the first variation of the first reluctance is a change from a first reluctance value to a second reluctance value, wherein the first reluctance value is higher or lower than the second reluctance value; and
the second variation of the second reluctance is a change from a third reluctance value to a fourth reluctance value, wherein the third reluctance value is higher or lower than the fourth reluctance value.

12. A vehicle (140) arranged to be propelled in a tubular system (130) along a propulsion track;
the propulsion track comprising:
a first rail (162, 164) having a first reluctance periodically varying over the length of the propulsion track;
a second rail (162, 164) having a second reluctance periodically varying over the length of the propulsion track;
the vehicle comprising:
a first electromagnetic actuator module (166, 168) arranged to interact with the first rail; and
a second electromagnetic actuator module (166, 168) arranged to interact with the second rail; and
the control module according to any of the preceding claims.

13. The vehicle (140) of claim 12, wherein the first electromagnetic actuator module (166, 168) is rigidly connected to the second electromagnetic actuator module (166, 168).

14. The vehicle (140) of claim 12 or claim 13, wherein the first electromagnetic actuator module (166, 168) is provided at a first lateral side of the vehicle and the second electromagnetic actuator (166, 168) module is provided at a second lateral side of the vehicle, the first lateral side being substantially opposite to the second lateral side.

15. A transport system comprising:
a tubular transport environment (110) comprising a propulsion track comprising:
a first rail (162, 164) having a first reluctance periodically varying over the length of the propulsion track;
a second rail (162, 164) having a second reluctance periodically varying over the length of the propulsion track; and
the vehicle (140) according to any of the claims 12 to 14.

## Patentansprüche

1. Steuerungsmodul zum Antreiben eines Fahrzeugs (140) relativ zu einer Spur, wobei die Spur umfasst:
eine erste Schiene (162, 164) mit einer ersten Reluktanz, die sich über die Länge der Spur periodisch ändert;
eine zweite Schiene (162, 164) mit einer zweiten Reluktanz, die sich über die Länge der Spur periodisch ändert;
wobei das Fahrzeug aufweist:
ein erstes elektromagnetisches Aktuatormodul (166, 168), das dazu ausgelegt ist, um mit der ersten Schiene zusammenzuwirken, um das Fahrzeug relativ zur Spur voranzutreiben; und
ein zweites elektromagnetisches Aktuatormodul (166, 168), das dazu ausgelegt ist, um mit der zweiten Schiene zusammenzuwirken, um das Fahrzeug relativ zur Spur voranzutreiben;
wobei das Steuerungsmodul **dadurch gekennzeichnet ist, dass** es dazu ausgelegt ist, um Daten zu empfangen, die mindestens eines der folgenden Elemente angeben:
einen ersten Abstand zwischen dem ersten elektromagnetischen Aktuatormodul und der ersten Schiene;
einen zweiten Abstand zwischen dem zweiten elektromagnetischen Aktuatormodul und der zweiten Schiene;
eine erste relative Position einer ersten Variation der ersten Reluktanz relativ zum ersten elektromagnetischen Aktuatormodul; und
eine zweite relative Position einer zweiten Variation der zweiten Reluktanz im Verhältnis zum zweiten elektromagnetischen Aktuatormodul;
wobei das Steuerungsmodul ferner für folgende Zwecke ausgelegt ist:
basierend auf den empfangenen Daten, Erzeugen eines ersten Stromsignals, das eine erste Wellenform aufweist, und Zuführen des erzeugten ersten Stromsignals an das erste elektromagnetische Aktuatormodul;
basierend auf den empfangenen Daten, Erzeugen eines zweiten Stromsignals, das eine zweite Wellenform aufweist, und Zuführen des erzeugten zweiten Stromsignals an das zweite elektromagnetische Aktuatormodul.

2. Steuerungsmodul nach Anspruch 1, wobei das Steuerungsmodul ferner dazu ausgelegt ist, falls die empfangenen Daten anzeigen, dass der erste Abstand um mehr als einen ersten Abstandsschwellenwert größer ist als der zweite Abstand, mindestens eine der folgenden Maßnahmen durchzuführen:
Erhöhen einer ersten Amplitude des ersten Stroms; und
Verringern einer zweiten Amplitude des zweiten Stroms.

3. Steuerungsmodul nach Anspruch 1, wobei das Steuerungsmodul ferner dazu ausgelegt ist, falls die empfangenen Daten anzeigen, dass der erste Abstand um mehr als einen zweiten Abstandsschwellenwert kleiner ist als der zweite Abstand, mindestens eine der folgenden Aktionen auszuführen:
Erhöhen einer zweiten Amplitude des zweiten Stroms; und
Verringern einer ersten Amplitude des ersten Stroms.

4. Steuerungsmodul nach einem der Ansprüche 2 und 3, wobei das erste Stromsignal und das zweite Stromsignal Wechselstromsignale sind und das Steuerungsmodul ferner dazu ausgelegt ist, mindestens eine der folgenden Vorgänge auszuführen:
falls die erste Amplitude erhöht wird, Ändern des ersten Stromsignals derart, dass ein vom ersten elektromagnetischen Aktuatormodul (166, 168) erzeugter erster Fluss an einer Stelle zunimmt, die im Vergleich zu vor der Änderung des ersten Stromsignals weiter oben liegt;
falls die erste Amplitude verringert wird, Ändern des ersten Stromsignals derart, dass ein vom ersten elektromagnetischen Aktuatormodul (166, 168) erzeugter erster Fluss an einer Stelle zunimmt, die im Vergleich zu vor der Änderung des ersten Stromsignals weiter unten liegt;
falls die zweite Amplitude erhöht wird, Ändern des zweiten Stromsignals derart, dass ein vom zweiten elektromagnetischen Aktuatormodul (166, 168) erzeugter zweiter Fluss an einer Stelle zunimmt, die im Vergleich zu vor der Änderung des zweiten Stromsignals weiter oben liegt; und
falls die zweite Amplitude verringert wird, Ändern des zweiten Stromsignals derart, dass ein vom zweiten elektromagnetischen Aktuatormodul (166, 168) erzeugter zweiter Fluss an einer Stelle zunimmt, die im Vergleich zu vor der Änderung des zweiten Stromsignals weiter unten liegt.

5. Steuerungsmodul nach Anspruch 4, wobei:
das erste Stromsignal eine erste Frequenz und eine erste Phase aufweist und, falls das erste Stromsignal geändert wird, die Frequenz im Wesentlichen konstant gehalten und die erste Phase geändert wird; und
das zweite Stromsignal eine zweite Frequenz und eine zweite Phase aufweist und, falls das zweite Stromsignal geändert wird, die Frequenz im Wesentlichen konstant gehalten und die zweite Phase geändert wird.

6. Steuerungsmodul nach einem der vorstehenden Ansprüche, wobei das Steuerungsmodul ferner für Folgendes ausgelegt ist:
Empfangen von Daten zu mindestens einem ersten Strom durch und/oder einer ersten Spannung über mindestens einen Teil des ersten elektromagnetischen Aktuatormoduls (166, 168) im Zeitverlauf und Bestimmen des ersten Abstands basierend auf dem ersten Strom und der ersten Spannung im Zeitverlauf; und
Empfangen von Daten über mindestens einen der folgenden Werte:
einen zweiten Strom durch oder eine zweite Spannung über mindestens einem Teil des zweiten elektromagnetischen Aktuatormoduls (166, 168) im Zeitverlauf und Bestimmen des zweiten Abstands basierend auf dem zweiten Strom und der zweiten Spannung im Zeitverlauf.

7. Steuerungsmodul nach einem der vorstehenden Ansprüche, wobei das Steuerungsmodul ferner für Folgendes ausgelegt ist:
Empfangen von Daten über mindestens einen ersten Strom und/oder eine erste Spannung über mindestens einen Teil des ersten elektromagnetischen Aktuatormoduls (166, 168) im Zeitverlauf und Bestimmen der ersten relativen Position basierend auf dem ersten Strom und der ersten Spannung im Zeitverlauf; und
Empfangen von Daten zu mindestens einem der folgenden Werte:
einem zweiten Strom durch oder einer zweiten Spannung über mindestens einem Teil des zweiten elektromagnetischen Aktuatormoduls (166, 168) im Zeitverlauf und Bestimmen der zweiten relativen Position basierend auf dem zweiten Strom und der zweiten Spannung im Zeitverlauf.

8. Steuerungsmodul nach Anspruch 7, wobei das Steuerungsmodul ferner dazu ausgelegt ist, mindestens eine der folgenden Größen zu bestimmen: eine Amplitude, eine Frequenz oder eine Phase von mindestens einem der folgenden Größen: dem ersten Strom, der ersten Spannung, dem zweiten Strom oder der zweiten Spannung.

9. Steuerungsmodul nach Anspruch 8, wobei das Steuerungsmodul ferner für Folgendes ausgelegt ist:
Bestimmen der ersten relativen Position basierend auf einer Phase zumindest eines des ersten Stroms und der ersten Spannung; und
Bestimmen der zweiten relativen Position basierend auf einer Phase zumindest eines des zweiten Stroms und der zweiten Spannung.

10. Steuerungsmodul nach einem der Ansprüche 1 bis 5, wobei:
das Steuerungsmodul dazu ausgelegt ist, Daten über den ersten Abstand von einem ersten Abstandssensor (436, 438) zu empfangen; und
das Steuerungsmodul dazu ausgelegt ist, Daten über den zweiten Abstand von einem zweiten Abstandssensor (436, 438) zu empfangen.

11. Steuerungsmodul nach einem der vorstehenden Ansprüche, wobei
die erste Variation der ersten Reluktanz eine Änderung von einem ersten Reluktanzwert zu einem zweiten Reluktanzwert ist, wobei der erste Reluktanzwert höher oder niedriger als der zweite Reluktanzwert ist; und
wobei die zweite Variation der zweiten Reluktanz eine Änderung von einem dritten Reluktanzwert zu einem vierten Reluktanzwert ist, wobei der dritte Reluktanzwert höher oder niedriger ist als der vierte Reluktanzwert.

12. Fahrzeug (140), das dazu ausgelegt ist, in einem Rohrsystem (130) entlang einer Antriebsspur angetrieben zu werden;
wobei die Antriebsspur umfasst:
eine erste Schiene (162, 164) mit einem ersten Widerstand, der sich über die Länge der Antriebsspur periodisch ändert;
eine zweite Schiene (162, 164) mit einem zweiten Reluktanzwert, der sich über die Länge der Antriebsspur periodisch ändert;
wobei das Fahrzeug umfasst:
ein erstes elektromagnetisches Aktuatormodul (166, 168), das dazu ausgelegt ist, um mit der ersten Schiene zusammenzuwirken; und
ein zweites elektromagnetisches Aktuatormodul (166, 168), das dazu ausgelegt ist, um mit der zweiten Schiene zusammenzuwirken; und
das Steuerungsmodul nach einem der vorstehenden Ansprüche.

13. Fahrzeug (140) nach Anspruch 12, wobei das erste elektromagnetische Aktuatormodul (166, 168) starr mit dem zweiten elektromagnetischen Aktuatormodul (166, 168) verbunden ist.

14. Fahrzeug (140) nach Anspruch 12 oder Anspruch 13, wobei das erste elektromagnetische Aktuatormodul (166, 168) an einer ersten Seitenfläche des Fahrzeugs und das zweite elektromagnetische Aktuatormodul (166, 168) an einer zweiten Seitenfläche des Fahrzeugs vorgesehen ist, wobei die erste Seitenfläche der zweiten Seitenfläche im Wesentlichen gegenüberliegt.

15. Transportsystem, umfassend:
eine röhrenförmige Transportumgebung (110), umfassend eine Antriebsspur, Folgendes umfassend:
eine erste Schiene (162, 164) mit einem ersten Widerstand, der sich über die Länge der Antriebsspur periodisch ändert;
eine zweite Schiene (162, 164) mit einem zweiten Reluktanzwert, der sich über die Länge der Antriebsspur periodisch ändert; und
das Fahrzeug (140) nach einem der Ansprüche 12 bis 14.

## Revendications

1. Module de contrôle pour entraîner un véhicule (140) par rapport à une voie, la voie comprenant :
un premier rail (162, 164) ayant une première réluctance variant périodiquement sur la longueur de la voie ;
un deuxième rail (162, 164) ayant une deuxième réluctance variant périodiquement sur la longueur de la voie ;
le véhicule comprenant :
un premier module d'actionneur électromagnétique (166, 168) agencé pour interagir avec le premier rail afin de propulser le véhicule par rapport à la voie ; et
un deuxième module d'actionneur électromagnétique (166, 168) agencé pour interagir avec le deuxième rail afin de propulser le véhicule par rapport à la voie ;
le module de contrôle étant **caractérisé en ce qu'**il est agencé pour recevoir des données indiquant au moins l'une parmi :
une première distance entre le premier module d'actionneur électromagnétique et le premier rail ;
une deuxième distance entre le deuxième module d'actionneur électromagnétique et le deuxième rail ;
une première position relative d'une première variation de la première réluctance par rapport au premier module d'actionneur électromagnétique ; et
une deuxième position relative d'une deuxième variation de la deuxième réluctance par rapport au deuxième module d'actionneur électromagnétique ; le module de contrôle étant en outre agencé pour :
sur la base des données reçues, générer un premier signal de courant ayant une première forme d'onde et fournir le premier signal de courant généré au premier module d'actionneur électromagnétique ;
sur la base des données reçues, générer un deuxième signal de courant ayant une deuxième forme d'onde et fournir le deuxième signal de courant généré au deuxième module d'actionneur électromagnétique.

2. Module de contrôle selon la revendication 1, dans lequel le module de contrôle est en outre agencé pour, si les données reçues indiquent que la première distance est supérieure à la deuxième distance de plus d'un premier seuil de distance, effectuer au moins l'une des actions parmi :
augmenter une première amplitude du premier courant ; et
diminuer une deuxième amplitude du deuxième courant.

3. Module de contrôle selon la revendication 1, dans lequel le module de contrôle est en outre agencé pour, si les données reçues indiquent que la première distance est inférieure à la deuxième distance de plus d'un deuxième seuil de distance, effectuer au moins l'une des actions parmi :
augmenter une deuxième amplitude du deuxième courant ; et
diminuer une première amplitude du premier courant.

4. Module de contrôle selon l'une quelconque des revendications 2 et 3, dans lequel le premier signal de courant et le deuxième signal de courant sont des signaux de courant alternatif ; et le module de contrôle est en outre agencé pour exécuter au moins l'une des actions parmi :
si la première amplitude est augmentée, modifier le premier signal de courant de sorte qu'un premier flux fourni par le premier module d'actionneur électromagnétique (166, 168) augmente à une position située plus en amont par rapport à avant la modification du premier signal de courant ;
si la première amplitude est diminuée, modifier le premier signal de courant de sorte qu'un premier flux fourni par le premier module d'actionneur électromagnétique (166, 168) augmente à une position située moins en amont par rapport à avant la modification du premier signal de courant ;
si la deuxième amplitude est augmentée, modifier le deuxième signal de courant de sorte qu'un deuxième flux fourni par le deuxième module d'actionneur électromagnétique (166, 168) augmente à une position située plus en amont par rapport à avant la modification du deuxième signal de courant ; et
si la deuxième amplitude est diminuée, modifier le deuxième signal de courant de sorte qu'un deuxième flux fourni par le deuxième module d'actionneur électromagnétique (166, 168) augmente à une position située moins en amont par rapport à avant la modification du deuxième signal de courant.

5. Module de contrôle selon la revendication 4, dans lequel :
le premier signal de courant a une première fréquence et une première phase et, si le premier signal de courant est modifié, la fréquence est maintenue sensiblement constante et la première phase est modifiée ; et
le deuxième signal de courant a une deuxième fréquence et une deuxième phase et, si le deuxième signal de courant est modifié, la fréquence est maintenue sensiblement constante et la deuxième phase est modifiée.

6. Module de contrôle selon l'une quelconque des revendications précédentes, dans lequel le module de contrôle est en outre agencé pour
recevoir des données sur au moins l'un parmi un premier courant traversant et une première tension aux bornes d'au moins une partie du premier module d'actionneur électromagnétique (166, 168) au cours du temps, et déterminer la première distance sur la base du premier courant et de la première tension au cours du temps ; et
recevoir des données sur au moins l'un parmi un deuxième courant traversant et une deuxième tension aux bornes d'au moins une partie du deuxième module d'actionneur électromagnétique (166, 168) au cours du temps, et déterminer la deuxième distance sur la base du deuxième courant et de la deuxième tension au cours du temps.

7. Module de contrôle selon l'une quelconque des revendications précédentes, dans lequel le module de contrôle est en outre agencé pour :
recevoir des données sur au moins l'un parmi un premier courant traversant et une première tension aux bornes d'au moins une partie du premier module d'actionneur électromagnétique (166, 168) au cours du temps, et déterminer la première position relative sur la base du premier courant et de la première tension au cours du temps ; et
recevoir des données sur au moins l'un parmi un deuxième courant traversant et une deuxième tension aux bornes d'au moins une partie du deuxième module d'actionneur électromagnétique (166, 168) au cours du temps, et déterminer la deuxième position relative sur la base du deuxième courant et de la deuxième tension au cours du temps.

8. Module de contrôle selon la revendication 7, dans lequel le module de contrôle est en outre agencé pour déterminer au moins l'une parmi une amplitude, une fréquence et une phase d'au moins l'un parmi le premier courant, la première tension, le deuxième courant et la deuxième tension.

9. Module de contrôle selon la revendication 8, dans lequel le module de contrôle est en outre agencé pour
déterminer la première position relative sur la base d'une phase d'au moins l'un parmi le premier courant et la première tension ; et
déterminer la deuxième position relative sur la base d'une phase d'au moins l'un parmi le deuxième courant et la deuxième tension.

10. Module de contrôle selon l'une quelconque des revendications 1 à 5, dans lequel :
le module de contrôle est agencé pour recevoir des données sur la première distance à partir d'un premier capteur de distance (436, 438) ; et
le module de contrôle est agencé pour recevoir des données sur la deuxième distance à partir d'un deuxième capteur de distance (436, 438).

11. Module de contrôle selon l'une quelconque des revendications précédentes, dans lequel
la première variation de la première réluctance est une modification d'une première valeur de réluctance à une deuxième valeur de réluctance, dans laquelle la première valeur de réluctance est supérieure ou inférieure à la deuxième valeur de réluctance ; et
la deuxième variation de la deuxième réluctance est une modification d'une troisième valeur de réluctance à une quatrième valeur de réluctance, dans laquelle la troisième valeur de réluctance est supérieure ou inférieure à la quatrième valeur de réluctance.

12. Véhicule (140) agencé pour être propulsé dans un système tubulaire (130) le long d'une voie de propulsion ;
la voie de propulsion comprenant :
un premier rail (162, 164) ayant une première réluctance variant périodiquement sur la longueur de la voie de propulsion ;
un deuxième rail (162, 164) ayant une deuxième réluctance variant périodiquement sur la longueur de la voie de propulsion ;
le véhicule comprenant :
un premier module d'actionneur électromagnétique (166, 168) agencé pour interagir avec le premier rail ; et
un deuxième module d'actionneur électromagnétique (166, 168) agencé pour interagir avec le deuxième rail ; et
le module de contrôle selon l'une quelconque des revendications précédentes.

13. Véhicule (140) selon la revendication 12, dans lequel le premier module d'actionneur électromagnétique (166, 168) est raccordé rigidement au deuxième module d'actionneur électromagnétique (166, 168).

14. Véhicule (140) selon la revendication 12 ou 13, dans lequel le premier module d'actionneur électromagnétique (166, 168) est prévu sur un premier côté latéral du véhicule et le deuxième module d'actionneur électromagnétique (166, 168) est prévu sur un deuxième côté latéral du véhicule, le premier côté latéral étant sensiblement opposé au deuxième côté latéral.

15. Système de transport comprenant :
un environnement de transport tubulaire (110) comprenant une voie de propulsion comprenant :
un premier rail (162, 164) ayant une première réluctance variant périodiquement sur la longueur de la voie de propulsion ;
un deuxième rail (162, 164) ayant une deuxième réluctance variant périodiquement sur la longueur de la voie de propulsion ; et
le véhicule (140) selon l'une quelconque des revendications 12 à 14.
